(19) Europäisches Patentamt
European Patent Office
Office européen des brevets

(11) **EP 3 772 192 B1**

(12) **FASCICULE DE BREVET EUROPEEN**

(45) Date de publication et mention
de la délivrance du brevet:
**28.07.2021 Bulletin 2021/30**

(51) Int Cl.:
***H04B 7/185*** *(2006.01)*

(21) Numéro de dépôt: **20188298.2**

(22) Date de dépôt: **29.07.2020**

(54) **PROCEDE DE DETERMINATION DES CONTRAINTES D'UN SYSTEME NON-GEOSTATIONNAIRE VIS-A-VIS D'UN AUTRE SYSTEME NON-GEOSTATIONNAIRE**

VERFAHREN ZUR BESTIMMUNG DER BEANSPRUCHUNGEN EINES NICHT GEOSTATIONÄREN SYSTEMS GEGENÜBER EINEM ANDEREN NICHT GEOSTATIONÄREN SYSTEM

METHOD FOR DETERMINING THE CONSTRAINTS OF A NON-GEOSTATIONARY SYSTEM WITH RESPECT TO ANOTHER NON-GEOSTATIONARY SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2019 FR 1908699**

(43) Date de publication de la demande:
**03.02.2021 Bulletin 2021/05**

(73) Titulaire: **THALES**
**92400 Courbevoie (FR)**

(72) Inventeurs:
• **LEVY, Jean-Christophe**
**31000 Toulouse (FR)**
• **GUERIN, Arnaud**
**31000 Toulouse (FR)**
• **GUERIN, Alexandre**
**31000 Toulouse (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2009/051907    WO-A1-2017/177343
WO-A2-2015/130950    US-A1- 2001 045 494
US-A1- 2016 278 063**

**Description**

L'invention concerne un procédé de détermination de contraintes opérationnelles à respecter pour une première constellation de satellites non-géostationnaires émettant en direction d'une station terrestre en un point sur Terre vis-à-vis d'une seconde constellation de satellites non-géostationnaires en liaison avec la même station terrestre. Ce procédé permet également de déterminer les contraintes opérationnelles à respecter pour une première station terrestre en liaison avec une première constellation de satellites non-géostationnaires émettant en direction d'un satellite appartenant à une seconde constellation de satellites non-géostationnaires et en liaison avec une seconde station terrestre en un point sur Terre.

La règlementation internationale impose aux différents systèmes non-géostationnaires de se coordonner afin d'éviter de se brouiller les uns les autres. Cette coordination se traduit généralement par la définition et la mise en place de niveaux d'interférences acceptables et par des contraintes opérationnelles qui peuvent induire une réduction de la capacité de certains systèmes.

Le besoin de coordination est une véritable contrainte car il impose de protéger et/ou de se protéger de tous les types de stations des autres constellations sur les zones de service de ces autres constellations, si les zones sont connues, voire même de protéger ou de se protéger pour tous les points sur Terre, sans connaître la direction dans laquelle pointe le terminal victime d'une interférence.

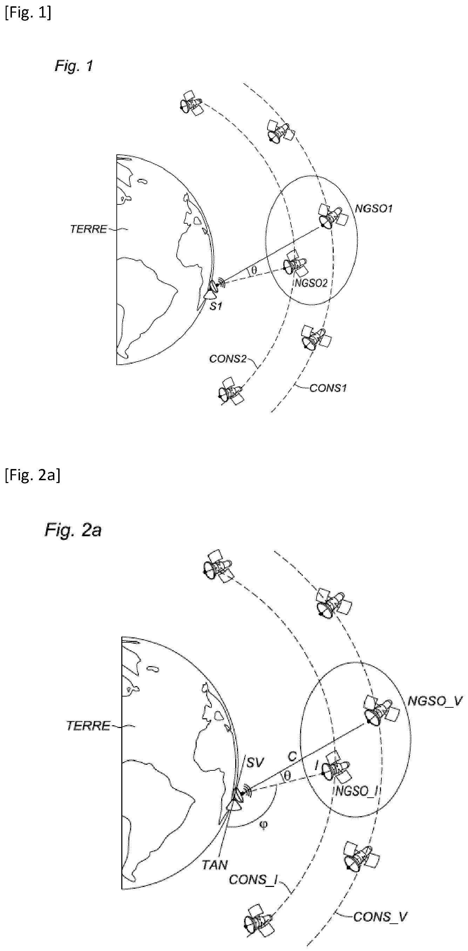

[Fig. 1] représente un schéma des solutions existantes pour coordonner des systèmes non-géostationnaires. Un satellite NGSO1 d'une première constellation non-géostationnaire CONS1 est en liaison avec une station terrestre S1 en un point sur Terre. Un angle topocentrique θ est défini entre le satellite NGSO1, la station terrestre S1 et un satellite NGSO2 d'une seconde constellation non-géostationnaire CONS2. Le satellite NGSO2 ne pourra émettre en direction de la station terrestre S1 que si l'angle topocentrique θ est supérieur à un angle prédéterminé, par exemple égal à 10°.

Cette condition sur l'angle topocentrique impose de fortes contraintes sur la constellation interférente CONS2, qui sont supérieures aux besoins du système subissant les interférences de la constellation CONS2, ce système comprenant la première constellation CONS1 et la station terrestre S1. Ces contraintes sont donc assez strictes et non flexibles.

De plus, cela implique un nombre important de contraintes opérationnelles à prendre en compte par le module opérationnel de management des ressources radio.

Le document WO2015/130950 A2 divulgue un procédé de détermination de contraintes opérationnelles à respecter pour une constellation de satellites non-géostationnaires.

L'invention vise à remédier aux inconvénients précités de l'art antérieur, plus particulièrement elle vise à proposer un procédé de détermination des contraintes opérationnelles pour une première constellation de satellites non-géostationnaires émettant en direction d'une station terrestre en liaison avec une seconde constellation de satellites non-géostationnaires. Elle vise également à proposer un procédé de détermination des contraintes opérationnelles pour une première station terrestre émettant en direction d'un satellite non-géostationnaire d'une constellation de satellites non-géostationnaires en liaison avec une seconde station terrestre. Le procédé selon l'invention permet notamment d'adapter le seuil angulaire topocentrique au-dessous duquel l'émission des satellites de la première constellation ou de la première station terrestre est interdite, et ainsi d'obtenir des contraintes s'adaptant à une situation opérationnelle précise.

Un objet de l'invention est donc un procédé, mis en œuvre par ordinateur, de détermination de contraintes opérationnelles à respecter pour une première constellation de satellites non-géostationnaires émettant en direction d'une station terrestre en un point sur Terre vis-à-vis d'une seconde constellation de satellites non-géostationnaires en liaison avec la station terrestre, les contraintes opérationnelles comprenant au moins une puissance d'émission maximale des satellites de la première constellation, le procédé comprenant les étapes de :

- détermination de triplets de valeurs limites de deux angles et d'un rapport interférence à bruit, les deux angles définissant une position d'un satellite de la première constellation par rapport à un axe formé par la station terrestre et un satellite de la seconde constellation et le rapport interférence à bruit étant le rapport entre des interférences émises par la première constellation sur une liaison entre la station terrestre et le satellite de la seconde constellation et du bruit de la liaison, la détermination des triplets étant réalisée de manière à ce qu'une distribution de rapports signal à bruit et interférence cumulés sur un intervalle de temps soit supérieure à une distribution de référence, les rapports signal à bruit et interférence étant les rapports entre un signal utile de la liaison et le bruit et les interférences ;

- détermination d'au moins la puissance maximale d'émission d'au moins un satellite de la première constellation à partir des triplets de valeurs.

Selon des modes de réalisation :

- Les triplets de valeurs limites sont déterminés par les étapes suivantes :

1) sélectionner, pour chaque instant d'un intervalle de temps, des satellites de la première constellation et un satellite de la seconde constellation et déterminer, pour chaque instant de l'intervalle de temps, un triplet de valeurs d'angles définissant une position des satellites sélectionnés de la première constellation vis-à-vis d'un axe formé par la station terrestre et le satellite sélectionné de la seconde constellation et de rapport signal à bruit et interférence, le rapport signal à bruit et interférence étant le rapport signal à bruit et interférence des satellites sélectionnés de la première constellation vis-à-vis de la liaison entre la station terrestre et le satellite sélectionné de la seconde constellation ;

2) déterminer les instants de l'intervalle de temps et ajuster la valeur de rapport signal à bruit et interférence du triplet de ces instants de manière à ce qu'une distribution des rapports signal à bruit et interférence cumulés sur l'intervalle de temps soit supérieure à une distribution de référence ;

3) déterminer des triplets de valeurs aux instants déterminés et une équation de surface paramétrée par les triplets, les triplets de valeurs ($\theta$, $\varphi$, I/N) étant les angles ($\theta$, $\varphi$) définissant la position d'un satellite sélectionné de la première constellation et I/N étant un rapport interférence à bruit sur la liaison déterminé par les rapports signal à bruit et interférence ajustés, les points de cette équation de surface représentant les triplets de valeurs limites ($\theta$, $\varphi$, I/N).

- La sélection des satellites dans l'étape 1) est faite de manière à minimiser un rapport signal à bruit et interférence sur une liaison entre la station terrestre et un satellite de la seconde constellation.

- Le procédé comprend les étapes suivantes effectuées après l'étape 3) :

4) Pour chaque instant de l'intervalle de temps et pour un satellite de la seconde constellation en liaison avec la station terrestre, sélectionner des satellites de la première constellation ayant des valeurs d'angle et un rapport interférence à bruit sur la liaison entre la station terrestre et le satellite de la seconde constellation, tels que pour ces valeurs d'angle, le rapport interférence à bruit est inférieur ou égal au rapport interférence à bruit obtenu par l'équation de surface pour ces mêmes valeurs d'angle ;

5) déterminer les instants de l'intervalle de temps et ajuster la valeur de rapport signal à bruit et interférence des satellites de la première constellation sélectionnés de ces instants de manière à minimiser l'écart entre une distribution des rapports signal à bruit et interférence cumulés sur l'intervalle de temps des satellites sélectionnés et une distribution de référence, la distribution des rapports signal à bruit et interférence cumulés étant supérieure à la distribution de référence ;

6) déterminer une deuxième équation de surface paramétrée par les valeurs d'angle et de rapport interférence à bruit ajustés à partir des rapports signal à bruit et interférence ajustés des satellites sélectionnés aux instants déterminés à l'étape 5), les points de cette deuxième équation de surface représentant les triplets de valeurs limites ($\theta$, $\varphi$, I/N).

- Le procédé comprend les étapes suivantes effectuées après l'étape 3) :

3') déterminer les valeurs d'angle définissant la position d'un satellite de la première constellation émettant en direction de la station terrestre en liaison avec un satellite de la seconde constellation et de rapport interférence à bruit du satellite de la première constellation sur la liaison entre la station terrestre et le satellite de la seconde constellation ;

3") comparer le rapport interférence à bruit au rapport interférence à bruit déterminé par l'équation de surface pour les valeurs d'angle déterminées en 3'), de sorte que :

- si le rapport interférence à bruit est inférieur ou égal à celui déterminé par l'équation de surface, conserver ou augmenter la puissance d'émission du satellite de la première constellation de manière à ce que son rapport interférence à bruit reste inférieur à celui de l'équation de surface ;

- si le rapport interférence à bruit est supérieur à celui obtenu avec l'équation de surface, diminuer la puissance d'émission du satellite de la première constellation de manière à ce que son rapport interférence à bruit soit supérieur ou égal à celui de l'équation de surface.

- Le procédé est mis en œuvre pour une pluralité d'hypothèses de positions de stations terrestres.

- Les satellites de la première constellation et le satellite de la seconde constellation sélectionnés à l'étape 1) sont ceux minimisant la valeur d'un angle définissant la position des satellites de la première constellation par rapport à l'axe formé entre la station terrestre et un satellite de la seconde constellation.

Un autre objet de l'invention est un procédé, mis en œuvre par ordinateur, de détermination de contraintes opérationnelles à respecter pour une première station terrestre en un point sur Terre, émettant en direction d'un satellite non-géostationnaire d'une constellation de satellites non-géostationnaires en liaison avec une seconde station terrestre vis-à-vis de la liaison entre le satellite et la seconde station terrestre, les contraintes opérationnelles comprenant au moins une puissance d'émission maximale de la première station terrestre, le procédé comprenant les étapes de :

- détermination de triplets de valeurs limites $(\theta, \varphi, I/N)$ de deux angles et d'un rapport interférence à bruit, les deux angles définissant une position de la première station terrestre par rapport à un axe formé par la seconde station terrestre et le satellite non-géostationnaire et le rapport interférence à bruit étant le rapport entre des interférences émises par la première station terrestre sur la liaison entre la seconde station terrestre et le satellite non-géostationnaire et du bruit de la liaison, la détermination des triplets étant réalisée de manière à ce qu'une distribution de rapports signal à bruit et interférence cumulés sur un intervalle de temps soit supérieure à une distribution de référence, les rapports signal à bruit et interférence étant les rapports entre un signal utile de la liaison et le bruit et les interférences ;

- détermination d'au moins la puissance maximale d'émission de la première station terrestre à partir des triplets de valeurs.

Selon des modes de réalisation :

- Les triplets de valeurs limites $(\theta, \varphi, I/N)$ sont déterminés par les étapes suivantes :

  1) sélectionner, pour chaque instant d'un intervalle de temps, des premières stations terrestres et un satellite non-géostationnaire en liaison avec la seconde station terrestre, et déterminer, pour chaque instant de l'intervalle de temps, un triplet de valeurs d'angles définissant une position des premières stations terrestres sélectionnées par rapport à un axe formé par la seconde station terrestre et le satellite non-géostationnaire et de rapport signal à bruit et interférence, le rapport signal à bruit et interférence étant le rapport signal à bruit et interférence des premières stations sélectionnées vis-à-vis de la liaison entre la seconde station terrestre et le satellite non-géostationnaire ;

  2) déterminer les instants de l'intervalle de temps et ajuster la valeur de rapport signal à bruit et interférence du triplet de ces instants de manière à ce qu'une distribution des rapports signal à bruit et interférence cumulés sur l'intervalle de temps soit supérieure à une distribution de référence ;

  3) déterminer des triplets de valeurs $(\theta, \varphi, I/N)$ aux instants déterminés et une équation de surface paramétrée par les triplets $(\theta, \varphi, I/N)$, les triplets de valeurs étant les angles définissant la position des premières stations terrestres sélectionnées par rapport à l'axe formé par la seconde station terrestre et le satellite non-géostationnaire et I/N étant un rapport interférence à bruit sur la liaison entre la seconde station terrestre et le satellite non-géostationnaire déterminé par les rapports signal à bruit et interférence ajustés, les points de cette équation de surface représentant les triplets de valeurs limites $(\theta, \varphi, I/N)$.

- La sélection des stations terrestres et du satellite non-géostationnaire à l'étape 1) est réalisée de manière à minimiser un rapport signal à bruit et interférence sur une liaison entre la seconde station terrestre et le satellite non-géostationnaire sélectionné.

- Le procédé comprend les étapes suivantes effectuées après l'étape 3) :

  4) Pour chaque instant de l'intervalle de temps et pour la seconde station terrestre, sélectionner des premières stations terrestres en des points sur Terre et un satellite non-géostationnaire en liaison avec la seconde station terrestre, tels que les première stations terrestres ont des valeurs d'angle et un rapport interférence à bruit sur la liaison entre la seconde station terrestre et le satellite non-géostationnaire, et que pour ces valeurs d'angle, le rapport interférence à bruit est inférieur ou égal au rapport interférence à bruit obtenu par l'équation de surface pour ces mêmes valeurs d'angle ;

5) déterminer les instants de l'intervalle de temps et ajuster la valeur de rapport signal à bruit et interférence des premières stations terrestres sélectionnées de ces instants, de manière à minimiser l'écart entre une distribution des rapports signal à bruit et interférence cumulés sur l'intervalle de temps des premières stations sélectionnées et une distribution de référence, la distribution des rapports signal à bruit et interférence cumulés étant supérieure à la distribution de référence ;

6) déterminer une deuxième équation de surface paramétrée par les valeurs d'angle et de rapport interférence à bruit ajustés à partir des rapports signal à bruit et interférence ajustés des premières stations terrestres sélectionnées aux instants déterminés à l'étape 5), les points de cette deuxième équation de surface représentant les triplets de valeurs limites ($\theta$, $\varphi$, I/N).

- Le procédé comprend les étapes suivantes effectuées après l'étape 3) :

3') déterminer les valeurs d'angle définissant la position d'une première station terrestre émettant en direction d'un satellite non-géostationnaire en liaison avec la seconde station terrestre et le rapport interférence à bruit de la première station terrestre sur la liaison entre la seconde station terrestre et le satellite non-géostationnaire ;

3") comparer le rapport interférence à bruit au rapport interférence à bruit déterminé par l'équation de surface pour les valeurs d'angle déterminées en 3'), de sorte que :

- si le rapport interférence à bruit est inférieur ou égal à celui déterminé par l'équation de surface, conserver ou augmenter la puissance d'émission de la première station terrestre de manière à ce que son rapport interférence à bruit reste inférieur à celui de l'équation de surface ;

- si le rapport interférence à bruit est supérieur à celui obtenu avec l'équation de surface, diminuer la puissance d'émission de la première station terrestre de manière à ce que son rapport interférence à bruit soit supérieur ou égal à celui de l'équation de surface.

- Le procédé est mis en œuvre pour une pluralité d'hypothèses de positions de la seconde station terrestre.

- Les premières stations terrestres et le satellite non-géostationnaire sélectionnés à l'étape 1) sont ceux minimisant une valeur d'angle définissant la position des premières stations terrestres par rapport à un axe formé par la seconde station terrestre et le satellite non-géostationnaire sélectionné.

Un autre objet de l'invention est un programme d'ordinateur comportant des instructions pour l'exécution du procédé de détermination de triplets de valeurs limites ($\theta$, $\varphi$, I/N) selon l'invention, lorsque le programme est exécuté par un processeur.

Encore un autre objet de l'invention est un support d'enregistrement lisible par un processeur sur lequel est enregistré un programme comportant des instructions pour l'exécution du procédé de détermination de triplets de valeurs limites ($\theta$, $\varphi$, I/N) selon l'invention ; lorsque le programme est exécuté par un processeur.

D'autres caractéristiques, détails et avantages de l'invention ressortiront à la lecture de la description faite en référence aux figures annexées données à titre d'exemple et qui représentent, respectivement :

[Fig. 1], déjà décrite, un schéma représentant les contraintes actuelles des constellations de satellites non-géostationnaires vis-à-vis d'un autre système non-géostationnaire selon l'art antérieur ;

[Fig. 2a] et [Fig. 2b], deux schémas du principe du procédé selon l'invention pour deux cas d'application ;

[Fig. 3], un schéma des étapes du procédé selon un premier mode de réalisation ;

[Fig. 4], un schéma des étapes du procédé selon un second mode de réalisation ;

[Fig. 5] et [Fig. 6], deux figures représentant le principe de l'étape 2) du procédé selon l'invention ; et

[Fig. 7], une figure représentant une équation surfacique obtenue par le procédé selon l'invention.

[Fig. 2a] présente un schéma du principe du procédé selon l'invention dans un premier cas d'application. Ce premier cas d'application représente une liaison descendante. Une constellation CONS_V, comprenant plusieurs satellites situés sur une orbite non-géostationnaire et comprenant des moyens aptes à communiquer avec une ou plusieurs stations terrestres, comprend un satellite non-géostationnaire NGSO_V en liaison avec une station terrestre SV située en un point sur Terre. Le satellite NGSO_V envoie et/ou reçoit donc des signaux C dits utiles à la station terrestre SV.

Une autre constellation CONS_I comprend un satellite non-géostationnaire NGSO_I émettant des signaux I vers la station terrestre SV. Ces signaux peuvent brouiller la liaison entre la station terrestre SV et le satellite victime NGSO_V et constituer une source d'interférence pour cette liaison. La constellation CONS_V et le satellite NGSO_V subissant ces interférences sont notés constellation victime et satellite victime dans la suite de la description.

On définit l'angle topocentrique θ comme l'angle formé entre le satellite NGSO_V et le satellite NGSO_I à partir de la station terrestre SV, et l'angle d'élévation φ comme l'angle formé entre le plan TAN tangent au sol à la station terrestre SV et l'axe formé par la station terrestre SV et le satellite NGSO_I. Ces deux angles θ et φ permettent de définir une position du satellite NGSO_I par rapport au satellite NGSO_V et à la station SV.

L'objectif du procédé est de définir la valeur maximale de puissance du signal d'interférence I que peut émettre le satellite NGSO_I vers la station SV pour une valeur d'angle topocentrique θ et une valeur d'angle d'élévation φ fixées, en générant un niveau d'interférences acceptable vis-à-vis de la constellation CONS_V. Autrement dit, l'objectif du procédé est de déterminer une puissance maximale pour chaque satellite NGSO_I de la constellation CONS_I en tenant compte des interférences générées éventuelles vis-à-vis de satellites NGSO_V d'une autre constellation CONS_V situés dans son voisinage. Pour cela, on détermine des triplets de valeurs limites (θ, φ, R) d'un angle topocentrique θ, d'un angle d'élévation φ et d'un rapport signal à bruit et interférence R de manière à ce qu'une distribution de rapports signal à bruit et interférence R cumulés sur un intervalle de temps soit supérieure à une distribution de référence REF.

Le rapport signal à bruit et interférence R est le rapport entre un signal utile C de la liaison entre la station terrestre SV et le satellite NGSO_V de la constellation victime CONS_V et le bruit N et les interférences I émises par la constellation interférente CONS_I sur cette liaison. Autrement dit, le rapport signal à bruit et interférence R est égal à C / (N+I).

A partir du rapport signal à bruit et interférence R, il est possible de déduire la puissance maximale d'émission d'un satellite NGSO_I de la constellation interférente CONS_I à partir des triplets de valeurs déterminés et à l'aide de relations théoriques connues du domaine. Plus particulièrement, on peut déterminer pour une valeur donnée d'angle topocentrique θ et une valeur donnée d'angle d'élévation φ, la puissance maximale d'émission à partir du rapport signal à bruit et interférence du triplet de valeurs comprenant les valeurs d'angles données.

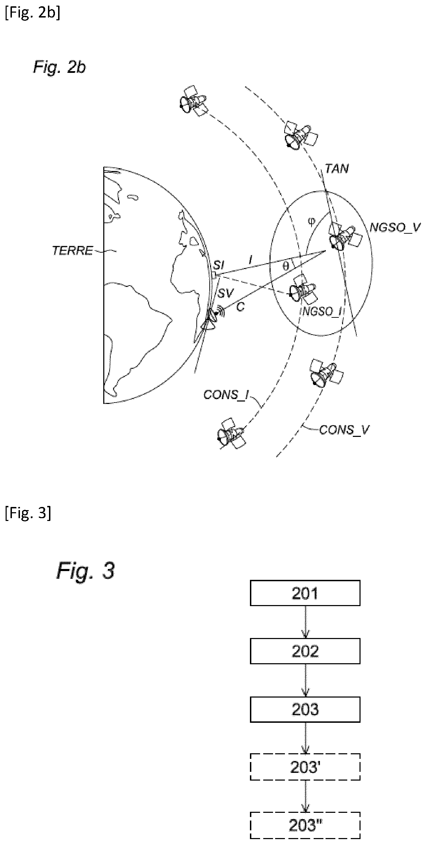

[Fig. 2b] présente un schéma du principe du procédé selon l'invention dans un second cas d'application, représentant une liaison montante. Une constellation CONS_V, comprenant plusieurs satellites situés sur une orbite non-géostationnaire et comprenant des moyens aptes à communiquer avec une ou plusieurs stations terrestres, comprend un satellite non-géostationnaire NGSO_V en liaison avec une station terrestre SV située en un point sur Terre. Le satellite NGSO_V envoie et/ou reçoit donc des signaux C dits utiles à la station terrestre SV.

Une autre station terrestre SI, dite station interférente, est en liaison avec une seconde constellation CONS_I de satellites non-géostationnaires, notamment avec un satellite non-géostationnaire NGSO_I. Cette autre station terrestre SI émet également des signaux I vers le satellite NGSO_V en liaison avec la station terrestre SV. Ces signaux I peuvent brouiller la liaison entre la station terrestre SV et le satellite NGSO_V, dit victime, et constituer une source d'interférence pour cette liaison.

Afin d'identifier la position de la station terrestre interférente SI, on définit un angle θ formé entre la station SV et la station interférence SI à partir du satellite non-géostationnaire victime NGSO_V, et un angle d'élévation φ comme l'angle formé entre le plan TAN tangent à l'orbite de la constellation victime CONS_V et au satellite NGSO_V et l'axe formé par la station terrestre interférente SI et le satellite NGSO_V. Ces deux angles θ et φ permettent de définir la position de la station SI par rapport au satellite NGSO_V et à la station SV.

L'objectif du procédé, pour ce second cas d'application, est de définir la valeur maximale de puissance du signal d'interférence I que peut émettre la station SI vers le satellite NGSO_V pour une valeur d'angle θ et une valeur d'angle φ fixées, en générant un niveau d'interférences acceptable vis-à-vis de la constellation CONS_V. Autrement dit, l'objectif du procédé est de déterminer une puissance maximale pour chaque station terrestre SI en tenant compte des interférences générées éventuelles vis-à-vis de satellites NGSO_V d'une constellation CONS_V en liaison avec une station terrestre SV située dans son voisinage. Pour cela, on détermine des triplets de valeurs limites (θ, φ, R) des angles θ, φ et d'un rapport signal à bruit et interférence R de manière à ce qu'une distribution de rapports signal à bruit et interférence R cumulés sur un intervalle de temps soit supérieure à une distribution de référence REF.

Le rapport signal à bruit et interférence R est le rapport entre un signal utile C de la liaison entre la station terrestre SV et le satellite NGSO_V de la constellation victime CONS_V et le bruit N et les interférences I émises par la station interférente SI sur cette liaison. Autrement dit, le rapport signal à bruit et interférence R est égal à C / (N+I).

A partir du rapport signal à bruit et interférence R, il est possible de déduire la puissance maximale d'émission de la station SI à partir des triplets de valeurs déterminés et à l'aide de relations théoriques connues du domaine. Plus particulièrement, on peut déterminer pour des valeurs données d'angles $\theta$ et $\varphi$, la puissance maximale d'émission à partir du rapport signal à bruit et interférence du triplet de valeurs comprenant les valeurs d'angles données.

[Fig. 3] présente un schéma des étapes du procédé selon un premier mode de réalisation. On se place dans le premier cas d'application (figure 2a) pour la description des figures 3 à 7.

Dans une première étape 201, on sélectionne, pour chaque instant d'un intervalle de temps et pour une station terrestre SV en un point sur Terre, des satellites de la constellation interférence CONS_I et un satellite NGSO_V de la constellation victime CONS_V selon un critère de sélection. Dans l'exemple décrit, on sélectionne les satellites de la constellation interférente CONS_I et un satellite NGSO_V qui minimisent le rapport signal à bruit et interférence R sur la liaison entre la station terrestre SV et le satellite de la constellation victime CONS_V. Cependant, on peut également sélectionner le satellite NGSO_V de la constellation victime présentant la plus haute élévation dans cette constellation vis-à-vis de la station terrestre SV. On peut également sélectionner un satellite interférent CONS_I ayant la plus longue durée de visibilité vis-à-vis de la station terrestre SV et/ou d'un satellite particulier de la constellation victime CONS_V.

On détermine ensuite, pour ces mêmes instants, un triplet de valeurs $(\theta, \varphi, R)$ d'angle topocentrique $\theta$, d'angle d'élévation $\varphi$ et de rapport signal à bruit et interférence R pour ces satellites sélectionnés par rapport à la station terrestre SV. L'angle topocentrique $\theta$ est l'angle minimal formé par le satellite NGSO_V de la constellation victime CONS_V sélectionné, la station terrestre SV et les satellites sélectionnés NGSO_I de la constellation interférente CONS_I. L'angle d'élévation $\varphi$ est l'angle minimal formé entre le plan tangent TAN au sol à la station terrestre SV et l'axe formé entre la station terrestre SV et les satellites sélectionnés NGSO_I de la constellation interférente CONS_I. Le rapport signal à bruit et interférence R est le rapport signal à bruit et interférence des satellites interférents NGSO_I de la constellation interférente CONS_I sur la liaison entre la station terrestre SV et le satellite victime NGSO_V de la constellation victime CONS_V. Ce rapport R est déterminé par simulation.

Puis dans une seconde étape 202, on détermine les instants de l'intervalle de temps pour lesquels on peut ajuster la valeur de rapport signal à bruit et interférence R du triplet de valeurs $(\theta, \varphi, R)$ de ces instants de manière à ce qu' une distribution des rapports signal à bruit et interférence R cumulés sur l'intervalle de temps soit supérieure à la distribution de référence REF.

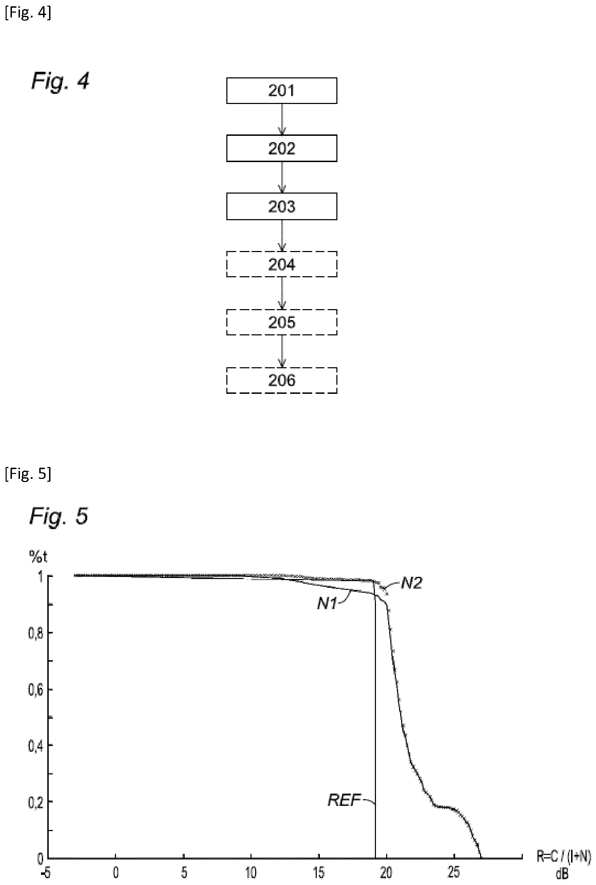

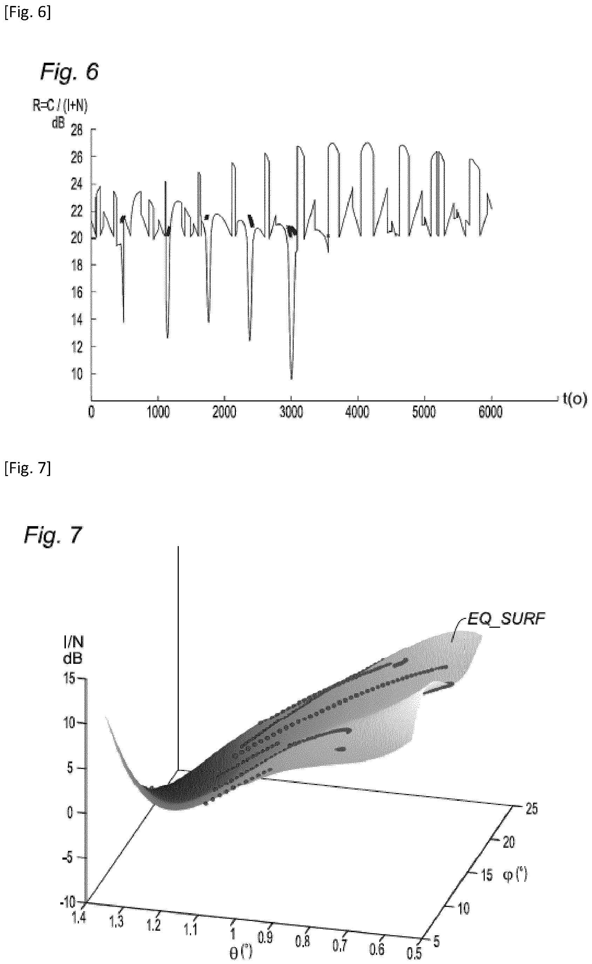

[Fig. 5] et [Fig. 6] illustrent l'étape 202 du procédé.

La figure 5 représente le pourcentage de temps %t de l'intervalle de temps en fonction du rapport signal à bruit et interférence R = C / (N+I). La courbe REF représente la distribution de référence et la courbe N1 représente les rapports signal à bruit et interférence cumulés des satellites des constellations victime et interférents sélectionnés vis-à-vis de la station terrestre, tandis que la courbe N2 représente ces mêmes rapports signal à bruit et interférence après l'identification des instants de temps dont la valeur du rapport signal à bruit et interférence est ajustée pour que la courbe N1 soit supérieure à la distribution de référence REF.

La figure 6 représente le rapport signal à bruit et interférence R en fonction des différents instants t de l'intervalle de temps. Ce sont ces rapports signal à bruit et interférence cumulés sur l'intervalle de temps (donc cumulés sur tous les instants t) qui permettent d'obtenir la courbe N1 de la figure 5. Les instants de temps identifiés INST sont représentés sur la figure 6 et leur valeur de rapport signal à bruit et interférence R est modifiée de manière obtenir la courbe N2 de la figure 5.

Pour déterminer ces instants t de l'intervalle de temps à partir des figures 5 et 6, on suppose que la courbe N1 de la figure 5 suit une loi de probabilité suivante :

$$P_{N1}(X \geq x_n) = p_n \quad (1)$$

où X représente une variable aléatoire du rapport signal à bruit et interférence R, $x_n$ une valeur particulière d'un rapport signal à bruit et interférence, $p_n$ la probabilité de temps correspondant à la valeur de rapport signal à bruite et interférence $x_n$ et n est un entier inférieur ou égal au nombre total d'instants de temps de l'intervalle de temps.

On suppose également que la distribution de référence REF suit la loi de probabilité suivante :

$$P_{REF}(X \geq x) = p \quad (2)$$

avec p une probabilité de temps correspondant à la valeur de rapport signal à bruit et interférence x et X une variable aléatoire représentant un rapport signal à bruit et interférence.

Si la courbe N1 devient inférieure à la distribution de référence REF pour toutes les probabilités p, alors cela signifie qu'il existe un entier i et m tels que :

$$P_{N1}(X \geq x_i) = p_i \;\; et \;\; P_{REF}(X \geq x_m) = p_i \;\; avec \; x_i < x_m \qquad (3)$$

et tels que :

$$P_{N1}(X \geq x_m) = p_m \;\; avec \; p_m < p_i \qquad (4)$$

On cherche alors à obtenir une loi de la courbe N1 telle que :

$$P_{N1}(X \geq x_i) = p_m \qquad (5)$$

On commence par identifier la plus grande valeur de i ne respectant pas le critère de l'équation (5), ce qui signifie que pour X = $x_{i+1}$, le critère sera respecté. On modifie alors la valeur $x_i$ qui devient égale à $x_{i+1}$, c'est-à-dire que la valeur de rapport signal à bruit $x_i$ devient égale à $x_{i+1}$.

On applique cela pour toutes les autres valeurs de i ne respectant pas le critère de l'équation (5) en parcourant les i dans le sens décroissant.

Cela permet d'identifier les valeurs $x_i$ de rapports signal à bruit et interférence à modifier. Il faut maintenant identifier les instants de temps t correspondant à ces valeurs $x_i$. Pour cela, sur la figure 6, on peut identifier tous les rapports signal à bruit et interférence égaux aux valeurs $x_i$ identifiées, puis modifier les valeurs de rapport signal à bruit et interférence de ces instants de manière à ce que la distribution des rapports signal à bruit et interférence R, comprenant les valeurs modifiées, cumulés sur l'intervalle de temps soit supérieure à la distribution de référence REF.

Dans la troisième étape 203, on détermine des triplets de valeurs (θ, φ, I/N) aux instants déterminés à l'étape précédente. Les triplets de valeurs (θ, φ, I/N) représentent les angles (θ, φ) définissant la position d'un satellite sélectionné NGSO_I de la première constellation CONS_I et I/N étant un rapport interférence à bruit sur la liaison déterminé par les rapports signal à bruit et interférence R ajustés à l'étape précédente pour les instants déterminés.

On détermine également dans cette étape une équation de surface paramétrée par les triplets de valeurs (θ, φ, I/N). Les points de l'équation de surface représentent les triplets de valeurs limites (θ, φ, I/N) autorisées pour les satellites de la constellation interférente CONS_I vis-à-vis de la liaison entre la station terrestre SV et le satellite victime NGSO_V.

Dans une quatrième 203' et une cinquième 203" étapes optionnelles, on va vérifier si un satellite de la constellation interférente CONS_I émettant en direction de la station terrestre SV émet un niveau de brouillage suffisamment faible pour préserver la liaison entre la station terrestre et un satellite non-géostationnaire de la constellation victime CONS_V.

Pour cela, on détermine dans la quatrième étape 203' les valeurs d'angle topocentrique θ, d'angle d'élévation φ et de rapport interférence à bruit I/N pour le satellite de la constellation interférente CONS_I émettant vers la station terrestre SV en liaison avec le satellite de la constellation victime CONS_V.

Puis, on compare dans l'étape suivante 203" le rapport interférence à bruit I/N au rapport interférence à bruit déterminé par l'équation de surface de l'étape 203 pour les valeurs d'angle θ et φ déterminées précédemment en 203'.

Si, le rapport interférence à bruit est inférieur ou égal au rapport déterminé par l'équation de surface, cela signifie que le satellite interférent interfère peu sur la liaison entre la station terrestre et le satellite de la constellation victime. Il n'est donc pas nécessaire de diminuer la puissance d'émission du satellite interférent. Il peut éventuellement être possible d'augmenter la puissance d'émission du satellite interférent, à condition que la valeur de rapport signal à bruit et interférence reste inférieure au rapport déterminé par l'équation de surface.

Si, le rapport signal à bruit et interférence est supérieur au rapport déterminé par l'équation de surface, cela signifie que le satellite interférent brouille la liaison entre la station terrestre et le satellite de la constellation victime. Il est donc nécessaire de diminuer la puissance d'émission du satellite interférent de manière à ce que son rapport signal à bruit et interférence soit supérieur ou égal à celui déterminé par l'équation de surface. Au lieu de diminuer la puissance d'émission du satellite interférent, il est également possible d'utiliser un autre satellite de la constellation interférente CONS_I pour baisser le niveau d'interférence.

La figure 7 représente une équation surfacique déterminée lors de la troisième étape 203 du procédé. L'équation surfacique EQ_SURF dépend des deux angles θ et φ définissant la position d'un satellite de la constellation interférence par rapport à la liaison entre la station terrestre SV et un satellite de la constellation victime et du rapport signal à bruit et interférence R défini par le rapport entre le signal utile de la liaison entre la station terrestre et le satellite de la constellation victime et la somme du bruit et des interférences sur cette liaison venant du satellite de la constellation interférente. L'angle θ peut être un angle topocentrique formé entre un satellite de la constellation interférente, la station terrestre et un satellite de la constellation victime, et l'angle φ un angle d'élévation formé entre le plan tangent à la station terrestre et l'axe formé entre la station terrestre et le satellite de la constellation interférente..

Les points de cette équation surfacique EQ_SURF définis par un triplet de valeurs (θ, φ, I/N) représentent, pour des valeurs d'angle θ et φ données, le rapport interférence à bruit I/N maximal et donc le niveau d'interférence maximal que peut avoir le satellite de la constellation interférente sur la liaison.

[Fig. 4] présente un schéma des étapes du procédé selon un second mode de réalisation. Les première 201, deuxième 202 et troisième 203 étapes sont identiques aux étapes 201, 202 et 203 décrites en référence à la figure 3.

Dans ce second mode de réalisation, trois étapes supplémentaires 204, 205 et 206 sont réalisées pour ajuster l'équation surfacique déterminée à la troisième étape 203 à une situation opérationnelle.

On sélectionne donc, dans la quatrième étape 204, pour chaque instant de l'intervalle de temps et pour un satellite de la constellation victime en liaison avec la station terrestre, les satellites de la constellation interférente qui présentent des valeurs d'angle topocentrique θ, d'angle d'élévation φ et de rapport interférence à bruit I/N, telles que pour ces valeurs d'angles θ et φ, le rapport interférence à bruit I/N est inférieur ou égal au rapport interférence à bruit déterminé par l'équation surfacique de l'étape 203 pour ces mêmes valeurs d'angle θ et φ.

Puis dans la cinquième étape 205, on détermine les instants de l'intervalle de temps pour lesquels on peut ajuster la valeur de rapport signal à bruit et interférence de manière à ce que la distribution des rapports signal à bruit et interférence cumulés sur l'intervalle de temps des satellites sélectionnés de la constellation interférente vis-à-vis de la liaison entre la station terrestre et le satellite de la constellation victime soit supérieure à la distribution de référence.

Enfin dans la sixième étape 206, on détermine une seconde équation de surface paramétrée par les valeurs d'angle θ et φ et de rapports interférence à bruit I/N ajustés à partir des rapports signal à bruit et interférence, ajustés à l'étape 205, des satellites sélectionnés aux instants déterminés à l'étape précédente. Les points de cette seconde équation de surface représentent les triplets de valeurs limites (θ, φ, I/N) corrigés. Cette seconde équation de surface permet de protéger les deux systèmes non-géostationnaires (celui comprenant la constellation interférente et celui comprenant la constellation victime et la station terrestre) tout en relâchant les contraintes définies par la première équation de surface et correspondant à la pire configuration de brouillage entre les deux constellations, alors qu'opérationnellement, les satellites des deux constellations peuvent être dans une configuration plus favorable.

Selon un autre mode de réalisation, le procédé est réalisé pour une pluralité d'hypothèses de stations terrestres. Pour cela, si on réalise le procédé pour N stations terrestres en liaison avec un satellite de la constellation victime CONS_V, on répète les étapes 201, 202 et 203 (et éventuellement les étapes 203', 203", 204, 205 et 206) N fois, chaque répétition étant réalisée pour une station différente des précédentes répétitions. Il faudra donc à chaque répétition de l'étape 1) redéfinir les satellites de la constellation interférente CONS_I et le satellite de la constellation victime CONS_V pour chaque instant qui minimisent le rapport signal à bruit et interférence sur la liaison.

Selon un mode de réalisation, la sélection des satellites des deux constellations vis-à-vis de la station terrestre est faite de manière à sélectionner le pire cas, par exemple en prenant le satellite, parmi ceux minimisant le rapport signal à bruit et interférence, donnant le plus petit angle topocentrique θ.

Selon un autre mode de réalisation, il est également possible de déterminer des triplets de valeurs limites (θ, φ, R) où R représente le rapport signal à bruit et interférence des satellites de la constellation interférente sur la liaison entre la station terrestre et un satellite de la constellation victime. Ainsi, on peut également déterminer une troisième équation de surface à partir de ces triplets de valeurs (θ, φ, R).

Pour cela, on utilise les triplets de valeurs (θ, φ, R) issus des instants déterminés à l'étape 202 pour paramétrer une troisième équation de surface.

Cependant, si l'on utilise l'équation de surface paramétrée par les triplets (θ, φ, R), on cherchera à sélectionner les satellites interférents présentant des valeurs de rapport R supérieures à celles données par la troisième équation de surface pour des valeurs d'angles données.

Par exemple, pour l'étape 204, on sélectionne les satellites de la constellation interférente tels que pour une valeur d'angle topocentrique θ donnée et pour une valeur d'angle φ d'élévation, le rapport signal à bruit et interférence R est supérieure au rapport R déterminé par la troisième équation surfacique pour ces mêmes valeurs d'angle.

Selon un autre exemple, pour l'étape 203", on compare les rapports signal à bruit et interférence R avec les rapports déterminés par la troisième équation surfacique pour des valeurs d'angle topocentrique et d'élévation déterminées à l'étape 203', et on diminue la puissance d'émission des satellites de la constellation interférente si le rapport R est inférieur à celui déterminé par la troisième équation surfacique.

Néanmoins, l'utilisation du rapport I/N est privilégiée, car le rapport I/N est indépendant des caractéristiques radiofréquences propres à la liaison entre la station terrestre et le satellite de la constellation victime.

Les figures ont été décrites pour le premier cas d'application. Il est également possible d'appliquer le procédé pour le second cas d'application, à savoir pour une liaison montante, dans laquelle c'est une station terrestre SI qui émet des signaux de brouillage I vers la liaison entre la station terrestre SV et un satellite de la constellation victime. Cela correspond à la situation présentée en figure 2b.

Dans ce cas d'application, on sélectionne dans l'étape 201, pour chaque instant d'un intervalle de temps, des premières stations terrestres SI en des points sur Terre, différent du point de la station terrestre SV, et un satellite non-géostationnaire d'une constellation non-géostationnaire en liaison avec la station terrestre SV, qui minimisent un rapport signal à bruit et interférence R sur la liaison entre la station terrestre SV et le satellite non-géostationnaire sélectionné. On détermine également, pour chaque instant de l'intervalle de temps, un triplet $(\theta, \varphi, R)$ de valeurs d'angle $(\theta, \varphi)$ définissant une position des premières stations terrestres SI sélectionnées par rapport à un axe formé par la station terrestre SV et le satellite non-géostationnaire et de rapport signal à bruit et interférence R. Les rapports R étant les rapports signal à bruit et interférence des premières stations sélectionnées vis-à-vis de la liaison entre la station terrestre et le satellite non-géostationnaire.

Dans la seconde étape 202, on détermine les instants de l'intervalle de temps et on ajuste, pour ces instants, la valeur de rapport signal à bruit et interférence du triplet $(\theta, \varphi, R)$ de ces instants de manière à ce qu'une distribution des rapports signal à bruit et interférence cumulés sur l'intervalle de temps soit supérieure à une distribution de référence (REF).

On détermine ensuite dans l'étape 203 des triplets de valeurs $(\theta, \varphi, I/N)$ aux instants déterminés et une équation de surface paramétrée par les triplets $(\theta, \varphi, I/N)$. Les triplets de valeurs $(\theta, \varphi, I/N)$ sont les angles $(\theta, \varphi)$ définissant la position des premières stations terrestres sélectionnées par rapport à l'axe formé par la seconde station terrestre SV et le satellite non-géostationnaire NGSO_V et le rapport interférence à bruit I/N sur la liaison entre la station terrestre SV et le satellite non-géostationnaire déterminé par les rapports signal à bruit et interférence (R) ajustés. Les points de cette équation de surface représentent les triplets de valeurs limites $(\theta, \varphi, I/N)$.

Dans le cas où on souhaite s'adapter à une situation opérationnelle, les étapes décrites en référence à la figure 4 sont les suivantes pour ce cas d'application :

Dans l'étape 204, pour chaque instant de l'intervalle de temps et pour la seconde station terrestre SV, on sélectionne des premières stations terrestres en des points sur Terre et un satellite non-géostationnaire en liaison avec la station terrestre SV, tels que les première stations terrestres ont des valeurs d'angle $(\theta, \varphi)$ et un rapport interférence à bruit (I/N) sur la liaison entre la station terrestre SV et le satellite non-géostationnaire de la constellation victime, et que pour ces valeurs d'angle, le rapport interférence à bruit est inférieur ou égal au rapport interférence à bruit obtenu par l'équation de surface pour ces mêmes valeurs d'angle.

Puis dans l'étape 205, on détermine les instants de l'intervalle de temps et on ajuste la valeur de rapport signal à bruit et interférence (R) des premières stations terrestres sélectionnées de ces instants, de manière à minimiser l'écart entre une distribution des rapports signal à bruit et interférence cumulés sur l'intervalle de temps des premières stations sélectionnées et une distribution de référence (REF), la distribution des rapports signal à bruit et interférence cumulés étant supérieure à la distribution de référence.

Enfin, dans l'étape 206, on détermine une deuxième équation de surface paramétrée par les valeurs d'angle et de rapport interférence à bruit ajustés à partir des rapports signal à bruit et interférence ajustés des premières stations terrestres sélectionnées aux instants déterminés à l'étape 205. Les points de cette deuxième équation de surface représentent les triplets de valeurs limites $(\theta, \varphi, I/N)$.

Pour le cas de la figure 3, on détermine dans l'étape 203', les valeurs d'angle $(\theta, \varphi)$ définissant la position d'une première station terrestre émettant en direction d'un satellite non-géostationnaire en liaison avec la station terrestre SV et le rapport interférence à bruit (I/N) de la première station terrestre sur la liaison entre la station terrestre et le satellite non-géostationnaire.

Puis on compare dans l'étape 203" le rapport interférence à bruit au rapport interférence à bruit déterminé par l'équation de surface pour les valeurs d'angle déterminées dans l'étape 203', de sorte que :

- si le rapport interférence à bruit est inférieur ou égal à celui déterminé par l'équation de surface, conserver ou augmenter la puissance d'émission de la première station terrestre de manière à ce que son rapport interférence à bruit reste inférieur à celui de l'équation de surface ;
- si le rapport interférence à bruit est supérieur à celui obtenu avec l'équation de surface, diminuer la puissance d'émission de la première station terrestre de manière à ce que son rapport interférence à bruit soit supérieur ou égal à celui de l'équation de surface.

Comme pour le premier cas d'application, on peut mettre en oeuvre le procédé pour une pluralité d'hypothèses de positions de la station terrestre SV.

De même, les premières stations terrestres et le satellite non-géostationnaire sélectionnés à l'étape 201 peuvent être ceux minimisant une valeur d'angle, par exemple $\theta$, définissant la position des premières stations terrestres par rapport à un axe formé par la seconde station terrestre et le satellite non-géostationnaire sélectionné.

Le procédé selon l'invention a été décrit dans le cadre de deux constellations non-géostationnaires. Cependant, le procédé n'est pas limité à cela, il peut également être utilisé dans un contexte plus général faisant intervenir une constellation non-géostationnaire et une constellation géostationnaire. Cela peut par exemple être dans le cas où une constellation géostationnaire (satellite de la constellation ou station terrestre en liaison avec la constellation géostationnaire) émet des signaux de brouillage sur une liaison entre une station terrestre sur Terre et une constellation non-géostationnaire. Cela peut également être dans le cas où une constellation non-géostationnaire (satellite de la constellation ou station terrestre en liaison avec la constellation non-géostationnaire) émet des signaux de brouillage sur une liaison avec une station terrestre sur Terre et une constellation géostationnaire.

L'invention peut être mise en œuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

En particulier, l'invention peut être implémentée par un dispositif comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Selon un mode de réalisation, le dispositif comprend au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation de l'invention décrits précédemment.

A titre d'exemple d'architecture matérielle adaptée à mettre en œuvre l'invention, un dispositif selon l'invention peut comporter un bus de communication auquel sont reliées une unité centrale de traitement ou microprocesseur (CPU, acronyme de « Central Processing Unit » en anglais), une mémoire morte (ROM, acronyme de « Read Only Memory » en anglais) pouvant comporter les programmes nécessaires à la mise en œuvre de l'invention ; une mémoire vive ou mémoire cache (RAM, acronyme de « Random Access Memory » en anglais) comportant des registres adaptés à enregistrer des variables et paramètres créées et modifiés au cours de l'exécution des programmes précités; et une interface de communication ou E/S (I/O, acronyme de « Input/Output » en anglais) adaptée à transmettre et à recevoir des données.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (« Cloud computing »), éventuellement avec selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

**Revendications**

1. Procédé, mis en œuvre par ordinateur, de détermination de contraintes opérationnelles à respecter pour une première constellation de satellites non-géostationnaires (CONS_I) émettant en direction d'une station terrestre (SV) en un point sur Terre vis-à-vis d'une seconde constellation de satellites non-géostationnaires (CONS_V) en liaison avec la station terrestre, les contraintes opérationnelles comprenant au moins une puissance d'émission maximale des satellites de la première constellation, le procédé comprenant les étapes de :

   - détermination de triplets de valeurs limites ($\theta$, $\varphi$, I/N) de deux angles ($\theta$, $\varphi$) et d'un rapport interférence à bruit, les deux angles (θ, φ) définissant une position d'un satellite (NGSO_I) de la première constellation (CONS_I) par rapport à un axe formé par la station terrestre (SV) et un satellite (NGSO_V) de la seconde constellation (CONS_V) et le rapport interférence à bruit (I/N) étant le rapport entre des interférences (I) émises par la première constellation sur une liaison entre la station terrestre (SV) et le satellite (NGSO_V) de la seconde constellation (CONS_V) et du bruit (N) de la liaison, la détermination des triplets étant réalisée de manière à ce qu'une distribution de rapports signal à bruit et interférence (R) cumulés sur un intervalle de temps soit supérieure à une distribution de référence (REF), les rapports signal à bruit et interférence (R) étant les rapports entre un signal utile (C) de la liaison et le bruit (N) et les interférences (I) ;

- détermination d'au moins la puissance maximale d'émission d'au moins un satellite de la première constellation à partir des triplets de valeurs.

2. Procédé, mis en œuvre par ordinateur, de détermination de contraintes opérationnelles selon la revendication 1 dans lequel les triplets de valeurs limites (θ, φ, I/N) sont déterminés par les étapes suivantes :

1) sélectionner (201), pour chaque instant d'un intervalle de temps, des satellites de la première constellation et un satellite de la seconde constellation et déterminer, pour chaque instant de l'intervalle de temps, un triplet (θ, φ, R) de valeurs d'angles (θ, φ) définissant une position des satellites sélectionnés de la première constellation (CONS_I) vis-à-vis d'un axe formé par la station terrestre (SV) et le satellite sélectionné de la seconde constellation (CONS_V) et de rapport signal à bruit et interférence (R), le rapport signal à bruit et interférence étant le rapport signal à bruit et interférence des satellites sélectionnés de la première constellation vis-à-vis de la liaison entre la station terrestre et le satellite sélectionné de la seconde constellation ;

2) déterminer (202) les instants de l'intervalle de temps et ajuster la valeur de rapport signal à bruit et interférence du triplet (θ, φ, R) de ces instants de manière à ce qu'une distribution des rapports signal à bruit et interférence cumulés sur l'intervalle de temps soit supérieure à une distribution de référence (REF) ;

3) déterminer (203) des triplets de valeurs (θ, φ, I/N) aux instants déterminés et une équation de surface paramétrée par les triplets (θ, φI/N), les triplets de valeurs (θ, φ, I/N) étant les angles (θ, φ) définissant la position d'un satellite sélectionné de la première constellation (CONS_I) et I/N étant un rapport interférence à bruit sur la liaison déterminé par les rapports signal à bruit et interférence (R) ajustés, les points de cette équation de surface représentant les triplets de valeurs limites (θ, φ, I/N).

3. Procédé, mis en œuvre par ordinateur, de détermination de contraintes opérationnelles selon la revendication 2 dans lequel la sélection des satellites dans l'étape 1) est faite de manière à minimiser un rapport signal à bruit et interférence (R) sur une liaison entre la station terrestre et un satellite de la seconde constellation.

4. Procédé, mis en œuvre par ordinateur, de détermination de contraintes opérationnelles selon l'une des revendications 2 ou 3 comprenant les étapes suivantes effectuées après l'étape 3) :

4) Pour chaque instant de l'intervalle de temps et pour un satellite de la seconde constellation en liaison avec la station terrestre, sélectionner (204) des satellites de la première constellation ayant des valeurs d'angle (θ, φ) et un rapport interférence à bruit (I/N) sur la liaison entre la station terrestre (SV) et le satellite de la seconde constellation (NGSO_V), tels que pour ces valeurs d'angle, le rapport interférence à bruit est inférieur ou égal au rapport interférence à bruit obtenu par l'équation de surface pour ces mêmes valeurs d'angle;

5) déterminer (205) les instants de l'intervalle de temps et ajuster la valeur de rapport signal à bruit et interférence (R) des satellites de la première constellation sélectionnés de ces instants de manière à minimiser l'écart entre une distribution des rapports signal à bruit et interférence cumulés sur l'intervalle de temps des satellites sélectionnés et une distribution de référence (REF), la distribution des rapports signal à bruit et interférence cumulés étant supérieure à la distribution de référence ;

6) déterminer (206) une deuxième équation de surface paramétrée par les valeurs d'angle et de rapport interférence à bruit ajustés à partir des rapports signal à bruit et interférence ajustés des satellites sélectionnés aux instants déterminés à l'étape 5), les points de cette deuxième équation de surface représentant les triplets de valeurs limites (θ, φ, I/N).

5. Procédé, mis en œuvre par ordinateur, de détermination de contraintes opérationnelles selon l'une des revendications 2 ou 3 dans lequel le procédé comprend les étapes suivantes effectuées après l'étape 3) :

3') déterminer (203') les valeurs d'angle (θ, φ) définissant la position d'un satellite de la première constellation émettant en direction de la station terrestre en liaison avec un satellite de la seconde constellation et de rapport interférence à bruit (I/N) du satellite de la première constellation sur la liaison entre la station terrestre et le satellite de la seconde constellation ;

3") comparer (203") le rapport interférence à bruit au rapport interférence à bruit déterminé par l'équation de surface pour les valeurs d'angle déterminées en 3'), de sorte que :

- si le rapport interférence à bruit est inférieur ou égal à celui déterminé par l'équation de surface, conserver ou augmenter la puissance d'émission du satellite de la première constellation de manière à ce que son rapport interférence à bruit reste inférieur à celui de l'équation de surface ;
- si le rapport interférence à bruit est supérieur à celui obtenu avec l'équation de surface, diminuer la puissance d'émission du satellite de la première constellation de manière à ce que son rapport interférence à bruit soit supérieur ou égal à celui de l'équation de surface.

6. Procédé, mis en œuvre par ordinateur, de détermination de contraintes opérationnelles selon l'une des revendications précédentes dans lequel le procédé est mis en œuvre pour une pluralité d'hypothèses de positions de stations terrestres.

7. Procédé, mis en œuvre par ordinateur, de détermination de contraintes opérationnelles selon l'une des revendications 2 à 6 dans lequel les satellites de la première constellation et le satellite de la seconde constellation sélectionnés à l'étape 1) sont ceux minimisant la valeur d'un angle (θ) définissant la position des satellites de la première constellation par rapport à l'axe formé entre la station terrestre et un satellite de la seconde constellation.

8. Programme d'ordinateur comportant des instructions pour l'exécution du procédé de détermination de triplets de valeurs limites (θ, φ, I/N) selon l'une quelconque des revendications 1 à 7, lorsque le programme est exécuté par un processeur.

9. Support d'enregistrement lisible par un processeur sur lequel est enregistré un programme comportant des instructions pour l'exécution du procédé de détermination de triplets de valeurs limites (θ, φ, I/N) selon l'une quelconque des revendications 1 à 7, lorsque le programme est exécuté par un processeur.


**Patentansprüche**

1. Computer-implementiertes Verfahren zum Bestimmen von einzuhaltenden Betriebseinschränkungen für eine erste Konstellation von nicht-geostationären Satelliten (CONS_I), die in Richtung einer Bodenstation (SV) an einem Punkt auf der Erde in Bezug auf eine zweite Konstellation von nicht-geostationären Satelliten (CONS_V) in Verbindung mit der Bodenstation senden, wobei die Betriebseinschränkungen mindestens eine maximale Sendeleistung der Satelliten der ersten Konstellation umfassen, wobei das Verfahren die folgenden Schritte umfasst:

- Bestimmen von Tripletts von Grenzwerten (θ, φ, I/N) zweier Winkel (θ, φ) und eines Interferenz-Rausch-Verhältnisses, wobei die beiden Winkel (θ, φ) eine Position eines Satelliten (NGSO_I) der ersten Konstellation (CONS_I) relativ zu einer Achse definieren, die durch die Bodenstation (SV) und einen Satelliten (NGSO_V) der zweiten Konstellation (CONS_V) gebildet wird, und wobei das Interferenz-Rausch-Verhältnis (I/N) das Verhältnis der Interferenzen (I), die von der ersten Konstellation auf einer Verbindung zwischen der Bodenstation (SV) und dem Satelliten (NGSO_V) der zweiten Konstellation (CONS_V) und Rauschen (N) der Verbindung ausgesendet wird, wobei das Bestimmen der Tripletts so erfolgt, dass eine über ein Zeitintervall akkumulierte Verteilung von Signal-Rausch- und Interferenz-Verhältnissen (R) größer ist als eine Referenzverteilung (REF), wobei die Signal-Rausch- und Interferenz-Verhältnisse (R) die Verhältnisse zwischen einem Nutzsignal (C) der Verbindung und dem Rauschen (N) und den Interferenzen (I) sind;
- Bestimmen mindestens der maximalen Sendeleistung von mindestens einem Satelliten der ersten Konstellation auf der Basis der Wertetripletts.

2. Computerimplementiertes Verfahren zum Bestimmen von Betriebseinschränkungen nach Anspruch 1, wobei die Grenzwerttripletts (θ, φ, I/N) durch die folgenden Schritte bestimmt werden:

1) Auswählen (201), für jeden Zeitpunkt eines Zeitintervalls, von Satelliten der ersten Konstellation und eines Satelliten der zweiten Konstellation, und Bestimmen, für jeden Zeitpunkt des Zeitintervalls, eines Tripletts (θ, φ, R) von Winkelwerten (θ, φ), die eine Position der ausgewählten Satelliten der ersten Konstellation (CONS_I) in Bezug auf eine durch die Bodenstation (SV) und den ausgewählten Satelliten der zweiten Konstellation (CONS_V) und des Signal-Rausch- und Interferenz-Verhältnisses (R) gebildete Achse definieren, wobei das Signal-Rausch- und Interferenz-Verhältnis das Signal-Rausch- und Interferenz-Verhältnis der ausgewählten Satelliten der ersten Konstellation in Bezug auf die Verbindung zwischen der Bodenstation und dem ausgewählten Satelliten der zweiten Konstellation ist;

2) Bestimmen (202) der Zeitpunkte des Zeitintervalls und Justieren des Signal-Rausch- und Interferenz-Wertes des Tripletts $(\theta, \varphi, R)$ dieser Zeitpunkte, so dass eine Verteilung der über das Zeitintervall akkumulierten Signal-Rausch- und Interferenz-Verhältnisse größer ist als eine Referenzverteilung (REF);

3) Bestimmen (203) von Wertetripletts $(\theta, \varphi, I/N)$ zu den ermittelten Zeitpunkten und einer durch die Tripletts $(\theta, \varphi, I/N)$ parametrisierten Flächengleichung, wobei die Wertetripletts $(\theta, \varphi, I/N)$ die Winkel $(\theta, \varphi)$ sind, die die Position eines ausgewählten Satelliten der ersten Konstellation (CONS_I) definieren, und I/N ein Interferenz-Rausch-Verhältnis auf der Verbindung ist, bestimmt durch die justierten Signal-Rausch- und Interferenz-Verhältnisse (R), wobei die Punkte dieser Flächengleichung die Grenzwert-Tripletts $(\theta, \varphi, I/N)$ darstellen.

**3.** Computerimplementiertes Verfahren zum Bestimmen von Betriebseinschränkungen nach Anspruch 2, wobei die Auswahl der Satelliten in Schritt 1) so erfolgt, dass ein Signal-Rausch- und Interferenz-Verhältnis (R) auf einer Verbindung zwischen der Bodenstation und einem Satelliten der zweiten Konstellation minimiert wird.

**4.** Computerimplementiertes Verfahren zum Bestimmen von Betriebseinschränkungen nach Anspruch 2 oder 3, das die folgenden nach Schritt 3) ausgeführten Schritte umfasst:

4) Auswählen (204), für jeden Zeitpunkt des Zeitintervalls und für einen Satelliten der zweiten Konstellation in Verbindung mit der Bodenstation, von Satelliten der ersten Konstellation mit Winkelwerten $(\theta, \varphi)$ und einem Interferenz-Rausch-Verhältnis (I/N) auf der Verbindung zwischen der Bodenstation (SV) und dem Satelliten der zweiten Konstellation (NGSO_V), so dass für diese Winkelwerte das Interferenz-Rausch-Verhältnis genauso groß wie oder kleiner als das Interferenz-Rausch-Verhältnis ist, das mit der Flächengleichung für dieselben Winkelwerte erhalten wird;

5) Bestimmen (205) der Zeitpunkte des Zeitintervalls und Justieren des Signal-Rausch- und Interferenz-Verhältniswertes (R) der ausgewählten Satelliten der ersten Konstellation zu diesen Zeitpunkten, um die Diskrepanz zwischen einer Verteilung der kumulativen Signal-Rausch- und Interferenz-Verhältnisse über das Zeitintervall der ausgewählten Satelliten und einer Referenzverteilung (REF) zu minimieren, wobei die Verteilung der kumulativen Signal-Rausch- und Interferenz-Verhältnisse größer als die Referenzverteilung ist;

6) Bestimmen (206) einer zweiten Flächengleichung, parametrisiert durch die justierten Winkel- und Interferenz-Rausch-Verhältniswerte auf der Basis der justierten Signal-Rausch- und Interferenz-Verhältnisse der ausgewählten Satelliten zu den in Schritt 5) bestimmten Zeitpunkten, wobei die Punkte dieser zweiten Flächengleichung die Grenzwerttripletts $(\theta, \varphi, I/N)$ darstellen.

**5.** Computerimplementiertes Verfahren zum Bestimmen von Betriebseinschränkungen nach einem der Ansprüche 2 oder 3, wobei das Verfahren die folgenden nach Schritt 3) ausgeführten Schritte umfasst:

3') Bestimmen (203') der Winkelwerte $(\theta, \varphi)$, die die Position eines Satelliten der ersten Konstellation definieren, der in Richtung der Bodenstation in Verbindung mit einem Satelliten der zweiten Konstellation sendet, und des Interferenz-Rausch-Verhältnisses (I/N) des Satelliten der ersten Konstellation auf der Verbindung zwischen der Bodenstation und dem Satelliten der zweiten Konstellation;

3") Vergleichen (203") des Interferenz-Rausch-Verhältnisses mit dem durch die Flächengleichung ermittelten Interferenz-Rausch-Verhältnisses für die in 3') bestimmten Winkelwerte, so dass:

- wenn das Interferenz-Rausch-Verhältnis genauso groß wie oder kleiner als das durch die Oberflächengleichung bestimmte ist, die Sendeleistung des Satelliten der ersten Konstellation beibehalten oder erhöht wird, so dass sein Interferenz-Rausch-Verhältnis kleiner bleibt als das durch die Oberflächengleichung bestimmte;

- wenn das Interferenz-Rausch-Verhältnis größer ist als das mit der Oberflächengleichung erhaltene, die Sendeleistung des Satelliten der ersten Konstellation verringert wird, so dass sein Interferenz-Rausch-Verhältnis genauso groß wie oder größer als das der Oberflächengleichung ist.

**6.** Computer-implementiertes Verfahren zum Bestimmen von Betriebseinschränkungen nach einem der vorherigen Ansprüche, wobei das Verfahren für eine Vielzahl von Bodenstationspositionsannahmen implementiert wird.

**7.** Computerimplementiertes Verfahren zum Bestimmen von Betriebseinschränkungen nach einem der Ansprüche 2 bis 6, wobei die Satelliten der ersten Konstellation und der Satellit der zweiten Konstellation wie in Schritt 1) ausgewählt diejenigen sind, die den Wert eines Winkels (θ) minimieren, der die Position der Satelliten der ersten Konstellation in Bezug auf die zwischen der Bodenstation und einem Satelliten der zweiten Konstellation gebildete Achse definiert.

**8.** Computerprogramm, welches Befehle aufweist, zum Ausführen des Verfahrens zum Bestimmen von Grenzwerttripletts (θ, φ, I/N) nach einem der Ansprüche 1 bis 7, wenn das Programm von einem Prozessor ausgeführt wird.

**9.** Prozessorlesbares Speichermedium, auf dem ein Programm gespeichert ist, das Befehle zur Ausführung des Verfahrens zum Bestimmen von Grenzwerttripletts (θ, φ, I/N) nach einem der Ansprüche 1 bis 7 umfasst, wenn das Programm von einem Prozessor ausgeführt wird.

**Claims**

**1.** A computer-implemented method for determining operational constraints to be followed for a first constellation of non-geostationary satellites (CONS_I) transmitting to a ground station (SV) at a point on the earth in relation to a second constellation of non-geostationary satellites (CONS_V) linked to the ground station, the operational constraints comprising at least one maximum transmission power for the satellites of the first constellation, the method comprising the following steps of:

- determining triplets of limit values ($\theta$, $\varphi$, $I/N$) of two angles ($\theta$, $\varphi$) and an interference-to-noise ratio, the two angles ($\theta$, $\varphi$) defining a position of a satellite (NGSO_I) of the first constellation (CONS_I) relative to an axis formed by the ground station (SV) and a satellite (NGSO_V) of the second constellation (CONS_V) and the interference-to-noise ratio (I/N) being the ratio between interference (I) emitted by the first constellation on a link between the ground station (SV) and the satellite (NGSO_V) of the second constellation (CONS_V) and the noise (N) of the link, the triplets being determined so that a distribution of signal-to-noise-plus-interference ratios (R) cumulated over a time interval is greater than a reference distribution (REF), the signal-to-noise-plus-interference ratios (R) being the ratios between a useful signal (C) of the link and the noise (N) and the interferences (I);
- determining at least the maximum transmission power of at least one satellite of the first constellation based on the triplets of values.

**2.** The computer-implemented method for determining operational constraints according to claim 1, wherein the triplets of limit values ($\theta$, $\varphi$, $I/N$) are determined by the following steps:

1) selecting (201), for each instant of a time interval, satellites from the first constellation and a satellite from the second constellation and determining, for each instant of the time interval, a triplet ($\theta$, $\varphi$, $R$) of values of angles ($\theta$, $\varphi$) defining a position of the satellites selected from the first constellation (CONS_I) in relation to an axis formed by the ground station (SV) and the satellite selected from the second constellation (CONS_V) and a signal-to-noise-plus-interference ratio (R), the signal-to-noise-plus-interference ratio (R) being the signal-to-noise-plus-interference ratio of the satellites selected from the first constellation in relation to the link between the ground station and the satellite selected from the second constellation;
2) determining (202) the instants of the time interval and adjusting the signal-to-noise-plus-interference ratio of the triplet ($\theta$, $\varphi$, $R$) of these instants so that a distribution of the signal-to-noise-plus-interference ratios cumulated over the time interval is greater than a reference distribution (REF);
3) determining (203) triplets of values ($\theta$, $\varphi$, $I/N$) at the determined instants and a surface equation parameterized by the triplets ($\theta$, $\varphi$, $I/N$), the triplets of values ($\theta$, $\varphi$, $I/N$) being the angles ($\theta$, $\varphi$) defining the position of a satellite selected from the first constellation (CONS_I) and I/N being an interference-to-noise ratio on the link determined by the adjusted signal-to-noise-plus-interference ratios (R), the points of this surface equation representing the triplets of limit values ($\theta$, $\varphi$, $I/N$).

**3.** The computer-implemented method for determining operational constraints according to claim 2, wherein the selection of the satellites in step 1) is undertaken so as to minimise a signal-to-noise-plus-interference ratio (R) on a link between the ground station and a satellite of the second constellation.

**4.** The computer-implemented method for determining operational constraints according to one of claims 2 or 3, comprising the following steps carried out after step 3):

4) selecting (204), for each instant of the time interval and for a satellite of the second constellation linked to the ground station, satellites from the first constellation having angle values ($\theta$, $\varphi$) and an interference-to-noise ratio (I/N) on the link between the ground station (SV) and the satellite of the second constellation (NGSO_V), such that for these angle values, the interference-to-noise ratio is less than or equal to the interference-to-noise ratio obtained by the surface equation for these same angle values;

5) determining (205) the instants of the time interval and adjusting the signal-to-noise-plus-interference ratio (R) of the satellites of the first constellation selected from these instants so as to minimise the difference between a distribution of the signal-to-noise-plus-interference ratios cumulated over the time interval of the selected satellites and a reference distribution (REF), the distribution of the cumulated signal-to-noise-plus-interference ratios being greater than the reference distribution;

6) determining (206) a second surface equation parameterized by the angle values and the interference-to-noise ratio adjusted on the basis of the adjusted signal-to-noise-plus-interference ratios of the selected satellites at the instants determined in step 5), with the points of this second surface equation representing the triplets of limit values ($\theta$, $\varphi$, I/N).

5. The computer-implemented method for determining operational constraints according to any one of claims 2 or 3, wherein the method comprises the following steps carried out after step 3):

3') determining (203') the angle values ($\theta$, $\varphi$) defining the position of a satellite of the first constellation transmitting to the ground station linked to a satellite of the second constellation and the interference-to-noise ratio (I/N) of the satellite of the first constellation on the link between the ground station and the satellite of the second constellation;

3") comparing (203") the interference-to-noise ratio to the interference-to-noise ratio determined by the surface equation for the angle values determined in 3'), in order to:

- if the interference-to-noise ratio is less than or equal to that determined by the surface equation, preserve or increase the transmission power of the satellite of the first constellation so that its interference-to-noise ratio remains below that of the surface equation;
- if the interference-to-noise ratio is greater than that obtained with the surface equation, reduce the transmission power of the satellite of the first constellation so that its interference-to-noise ratio is greater than or equal to that of the surface equation.

6. The computer-implemented method for determining operational constraints according to one of the preceding claims, wherein the method is implemented for a plurality of hypotheses of positions of ground stations.

7. The computer-implemented method for determining operational constraints according to any one of claims 2 to 6, wherein the satellites of the first constellation and the satellite of the second constellation selected in step 1) are those minimising the value of an angle ($\theta$) defining the position of the satellites of the first constellation relative to the axis formed between the ground station and a satellite of the second constellation.

8. A computer program having instructions for executing the method for determining triplets of limit values ($\theta$, $\varphi$, I/N) according to any one of claims 1 to 7, when the program is executed by a processor.

9. A processor-readable recording medium, on which a program is recorded that comprises instructions for executing the method for determining triplets of limit values ($\theta$, $\varphi$, I/N) according to any one of claims 1 to 7, when the program is executed by a processor.

[Fig. 1]

*Fig. 1*

[Fig. 2a]

*Fig. 2a*

[Fig. 2b]

*Fig. 2b*

[Fig. 3]

*Fig. 3*

[Fig. 4]

*Fig. 4*

[Fig. 5]

*Fig. 5*

[Fig. 6]

*Fig. 6*

R=C / (I+N)
dB

[Fig. 7]

*Fig. 7*

EQ_SURF

## RÉFÉRENCES CITÉES DANS LA DESCRIPTION

**Documents brevets cités dans la description**

- WO 2015130950 A2